# EUROPEAN PATENT APPLICATION

(11) **EP 2 740 657 A1**
(43) Date of publication of application: **11.06.2014**
(21) Application number: 13152122.1
(22) Date of filing: 22.01.2013
(51) Int. Cl.: B62K 19/16, B29C 51/10, B29C 51/14, B32B 27/12, B32B 27/30, B29C 70/00

(54) **Shock-absorbable bicycle frame and method of manufacturing the same**

(30) Priority: 06.12.2012 TW 101145933
(71) Applicant: Yuan Min An Enterprise Co., Ltd., Taichung City 420 (TW)
(72) Inventor: Yu, Kuo-Pin, 420 Taichung City (TW)
(74) Representative: Becker Kurig Straus

(57) **Abstract**

A shock-absorbable bicycle frame (10) includes a tubular member (28) formed of an internal tube (24) and an external tube (20) sleeved onto at least one part of the internal tube (24). None of any gap is formed between the internal and external tubes (24, 20). The internal tube (24) is made of fiber reinforced thermosetting plastic. The external tube (20) is made of fiber reinforced thermoplastic plastic. The method of manufacturing the shock-absorbable bicycle frame (10) includes the steps of putting a fiber fabric impregnated with thermoplastic resin into a mold (30) and heating it up to 230-250°C to form an external tube (20), and inserting a fiber fabric impregnated with thermosetting resin into the external tube (20) and heating it up to 140-160°C to form an internal tube (24) inside the external tube (20). In light of this, the bicycle frame (10) is not only lightweight and preferably shock-absorbable but simple in fabrication with high yield rate.

## Description

### BACKGROUND OF THE INVENTION

### 1. Field of the Invention

The present invention relates generally to a bicycle and more particularly, to a shock-absorbable bicycle frame and a method of manufacturing the same.

### 2. Description of the Related Art

Each of conventional bicycle frames made of carbon fiber reinforced materials is formed by that a carbon fiber fabric impregnated with thermosetting resin, e.g. epoxy resin, serves as the raw material and after the carbon fiber fabric is scrolled and preformed, it is heated in a mold for curing and shaping. Such material is lightweight and structurally high-strength, so it has become very popular for the bicycle manufacturers.

However, the bicycle frame made of such material is ineffective in shock absorbability, so it needs a spring or a hydraulic shock absorber for shock absorbability. On the other hand, the shock absorber increases the weight of bicycle frame and decreases power transmission efficiency as side effects. For this reason, how to manufacture a bicycle frame which is lightweight and shock-absorbable has become one of key issues for research and development in the relevant industry.

### SUMMARY OF THE INVENTION

The primary objective of the present invention is to provide a bicycle frame, which is lightweight and preferably shock-absorbable.

The secondary objective of the present invention is to provide a method of manufacturing the bicycle frame, which is of simple steps, easily operated, and of high yield rate.

The foregoing objectives of the present invention are attained by the method having the following steps: (a) putting a preformed external tube formed of scrolled fiber fabric impregnated with thermoplastic resin into a mold, heating the preformed external tube up to 230-250°C, and pressurizing the preformed external tube internally to make an external circumference of the preformed external tube contact against an internal wall of the mold to make the preformed external tube be cured and become an external tube; (b) inserting a preformed internal tube formed of a scrolled fiber fabric impregnated with thermosetting resin into the cured external tube; and (c) heating the preformed internal tube and the cured external tube up to 140-160°C and pressurizing the preformed internal tube internally to make an external circumference of the preformed internal tube contact against an internal wall of the external tube to further make the preformed internal tube be cured and become an internal tube in a way that the internal tube and the external tube can be bonded without any gap formed therebetween.

The bicycle frame made by the above-mentioned method comprises a tubular member formed of an internal tube and an external tube sleeved onto at least one part of the internal tube. None of any gap is formed between the internal and external tubes. The internal tube is made of fiber reinforced thermosetting plastic. The external tube is made of fiber reinforced thermoplastic plastic.

### BRIEF DESCRIPTION OF THE DRAWINGS

FIG. 1 is a schematic view of a bicycle having a bicycle frame made by a method provided by a preferred embodiment of the present invention.
FIGS. 2-5 illustrate steps of the method of the preferred embodiment of the present invention.
FIG. 6 is a perspective view of a part of the bicycle frame made by the method in accordance with the preferred embodiment of the present invention.
FIG. 7 is a perspective view of a part of a bicycle frame made by a method in accordance with another preferred embodiment of the present invention.

### DETAILED DESCRIPTION OF PREFERRED EMBODIMENTS

Structural features and desired effects of the present invention will become more fully understood by reference to a preferred embodiment given hereunder. However, it is to be understood that the embodiment is given by way of illustration only, thus is not limitative of the claim scope of the present invention.

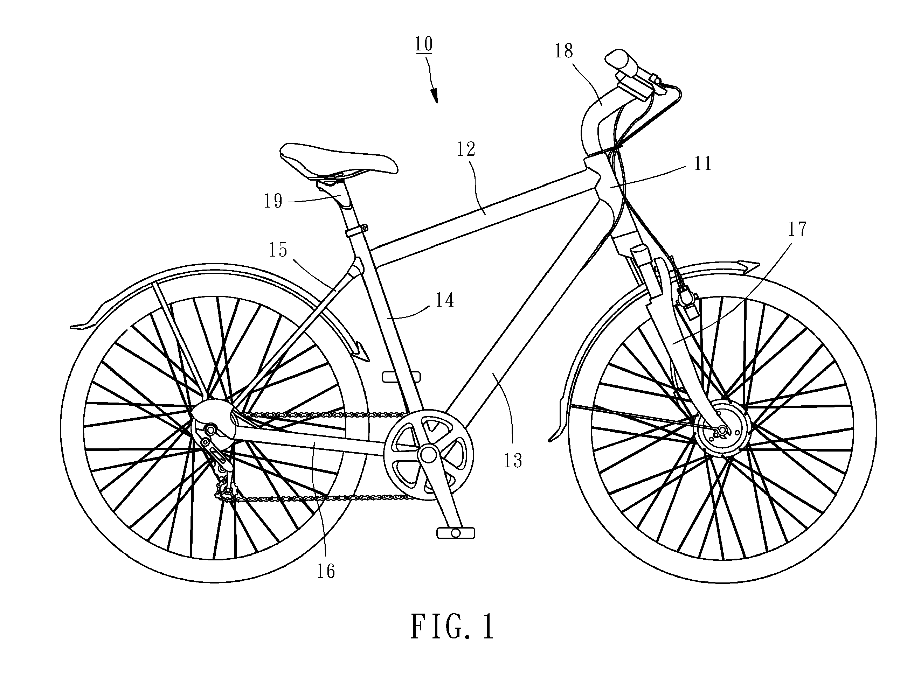

Referring to FIG. 1, a shock-absorbable bicycle frame 10 constructed according to a method of a preferred embodiment is formed of a head tube 11, a top tube 12 extending rearward horizontally from the head tube 11, a down tube 13 extending downward and rearward from the head tube 11, a seat tube 14 connected with a rear end of the top tube 12 and a rear end of the down tube 13, a seat stay 15 extending rearward from an upper part of the seat tube 14, a chain stay 16 extending rearward from a lower part of the seat tube 14 and connected with a rear end of the seat stay 15, a fork 17 rotatable inserted into the head tube 11, a handlebar 18 mounted a top end of the fork 17, and a seat post 19 inserted into the seat tube 14. Because all of the aforesaid components of the bicycle frame 10 are tubular, only the top tube 12 is taken as an example for detailed description hereunder.

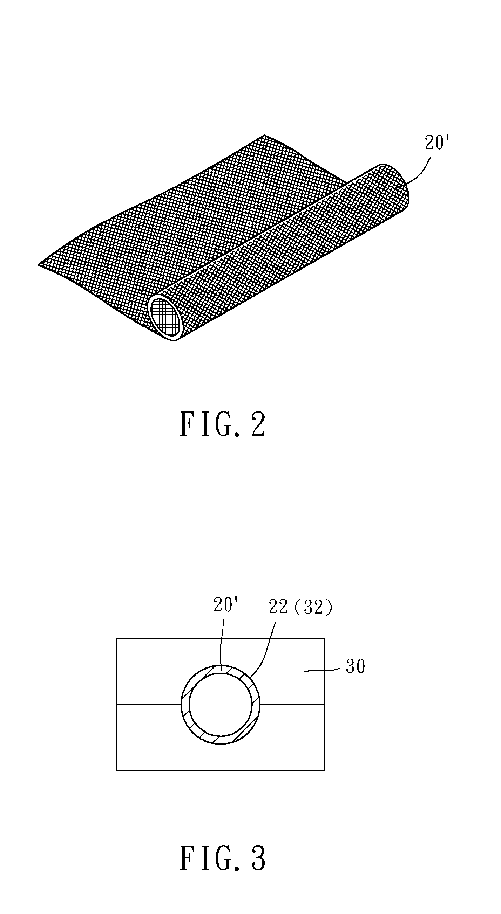

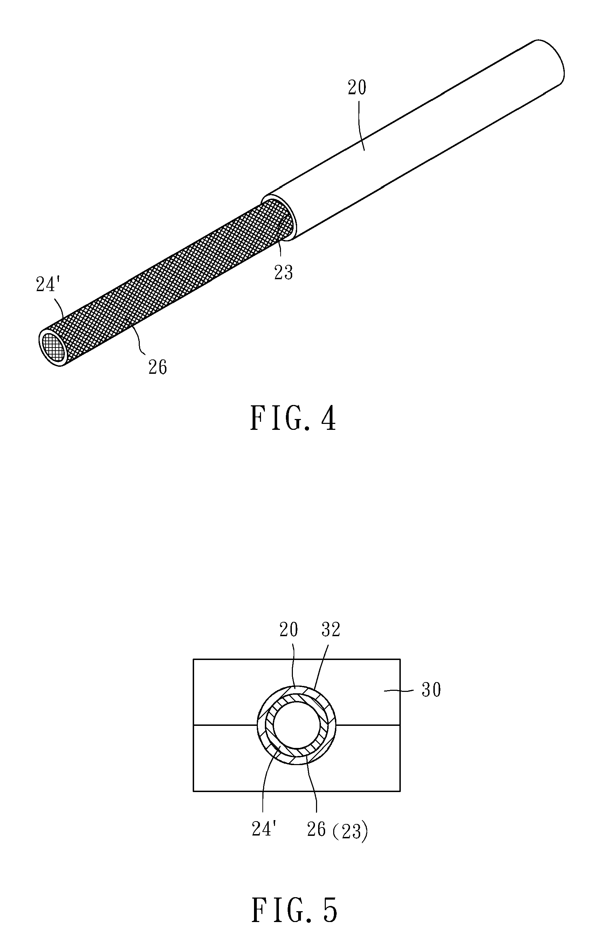

A method of manufacturing the shock-absorbable bicycle frame, including but not limited a top tube, of the present invention includes the following steps.
(a) Referring to FIG. 2, scroll a fiber fabric impregnated with thermoplastic resin to make the fabric become a preformed external tube 20'. The fiber can be but not limited to carbon fiber, boron fiber, glass fiber, or KEVLAR^{®} fiber and the fiber is preferably carbon fiber in this embodiment. The thermoplastic resin can be but not limited to nylon, polyethylene (PE), polypropylene (PP), polystyrene (PS), acrylonitrile butadiene styrene (ABS) resin, or polyvinyl chloride (PVC) and is preferably a nylon, such as nylon 6, nylon 11, nylon 12 or nylon 66, in this embodiment. Next, referring to FIG. 3, put the preformed external tube 20' into a mold 30, heat it up to 230-250°C, and internally pressurize the preformed external tube 20' to make an external circumference 22 of the preformed external tube 20' contact against an internal wall 32 of the mold 30. After 30 minutes, the preformed external tube 20 is cured to become an external tube 20. In this step, the preformed external tube 20' is preferably heated up to 240°C and internally pressurized by inflation by introducing a gas having a pressure higher than one atmospheric pressure into the preformed external tube.
(b) Referring to FIG. 4, scroll a fiber fabric impregnated with thermosetting resin to make the fabric become a preformed internal tube 24' and insert the preformed internal tube 24' into the cured external tube 20. To strengthen the bond between the preformed internal tube 24' and the external tube 20, an adhesive material can be coated to an external circumference 26 of the preformed internal tube 24' or an internal wall 23 of the external tube 20. The adhesive material can be epoxy resin, other liquid or other solid. By means of the adhesive material, the preformed internal tube 24' and the cured external tube 20 can be bonded more firmly. The fiber can be but not limited to carbon fiber, boron fiber, glass fiber, or KEVLAR^{®} fiber and the fiber is preferably carbon fiber in this embodiment. The thermosetting resin can be but not limited to epoxy resin, acrylic resin, phenolic resin, or polyurethane (PU) and is preferably epoxy resin.
(c) Referring to FIG. 5, heat the preformed internal tune 24' and the external tube 20 inside the mold 30 up to 140-160°C, preferably 150°C, and then pressurize the preformed internal tube 24' internally to make the external circumference 26 of the preformed internal tube 24' contact against the internal wall 23 of the external tube 20. After 15-30 minutes, the preformed internal tube 24' can be cured to become an internal tube 24 and meanwhile, the internal tube 24 and the external tube 20 are bonded together without any gap formed therebetween. In this step, the preformed internal tube 24' is internally pressurized by inflation by introducing a gas having a pressure higher than one atmospheric pressure into the preformed internal tube and the mold can be the same as the one in the step (a). The mold can be different from the one in the step (a), too.

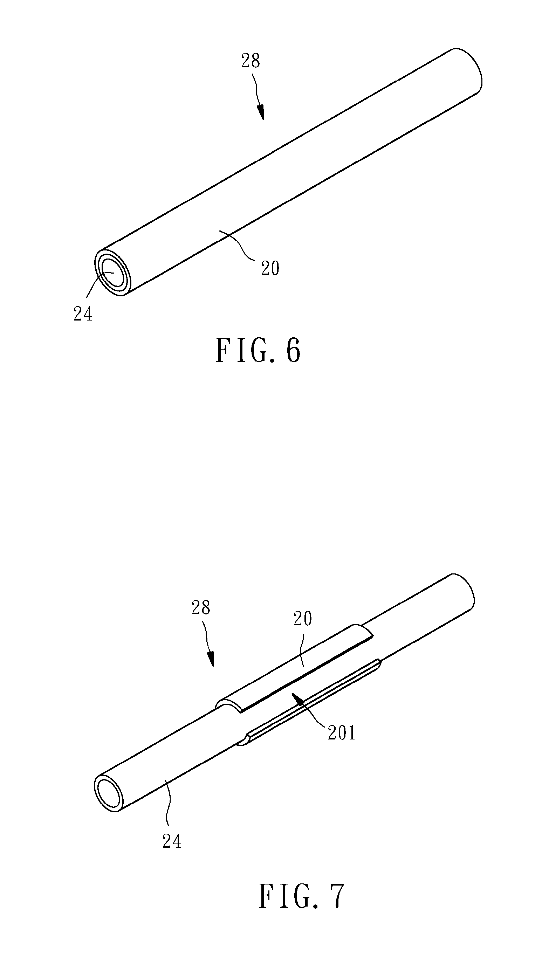

In light of the steps, specific parts of the bicycle frame can be manufactured, such as the top tube 12. When the specific parts are connected with other parts, a complete bicycle frame can be made. Structurally, referring to FIG. 6, the shock-absorbable bicycle frame 10 includes a tubular member 28 formed of an internal tube 24 and an external tube 20 sleeved onto the internal tube 24 and none of any gap is available therebetween. The internal tube 24 is made of fiber reinforced thermosetting plastic. The external tube 20 is made of fiber reinforced thermoplastic plastic and encases at least one part of the internal tube 24, not certainly encasing the internal tube 24 completely.

Because the internal tune 24 is made of fiber reinforced thermosetting plastic to be more rigid but less flexible than the external tube 20. The external tube 20 is made of fiber reinforced thermoplastic plastic to be less rigid but more flexible (shock-absorbable) than the internal tube 24. Thus, after actual test, it is found that the bicycle frame of the present invention has required rigidity and flexibility (shock absorbability) to certain degree to effectively absorb the vibration resulting from the road roughness and transmitted to the rider to relieve the rider's discomfort, such that the operational convenience of the bicycle can be effectively enhanced. Moreover, the method of the present invention not only provides simple steps, easy operation, and high product yield rate but advantage of low production cost.

The method of the present invention can be applied to either part of the bicycle frame, like the head tube 11, the top tube 12, the down tube 13, the seat tube 14, the seat stay 15, the chain stay 16, the fork 17, the handlebar 18, or the seat post 19, especially the two stays of the seat stay 15, the two stays of the chain stay 16, or the two blades of the fork 17. How much the external tube 20 encases the internal tube 24 depends on the actual need, so the external tube 20 can encase the internal tube 24 completely or partially to form a gap 201 thereon to expose a part of the internal tube 24, as shown in FIG. 7.

## Claims

1. A method of manufacturing a shock-absorbable bicycle frame (10), which is **characterized in that** the method comprises steps of:
(a) putting a preformed external tube (20') formed of scrolled fiber fabric impregnated with thermoplastic resin into a mold (30), heating the preformed external tube (20') up to 230-250°C, and pressurizing the preformed external tube (20') internally to make an external circumference (22) of the preformed external tube (20') contact against an internal wall (32) of the mold (30) to make the preformed external tube (20') be cured and become an external tube (20);
(b) inserting a preformed internal tube (24') formed of a scrolled fiber fabric impregnated with thermosetting resin into the external tube (20); and
(c) heating the preformed internal tube (24') and the external tube (20) up to 140-160°C and pressurizing the preformed internal tube (24') internally to make an external circumference (26) of the preformed internal tube (24') contact against an internal wall (23) of the external tube (20) to further make the preformed internal tube (24') be cured and become an internal tube (24) in a way that the internal tube (24) and the external tube (20) are bonded without any gap formed therebetween.

2. The method as defined in claim 1, which is **characterized in that** the thermoplastic resin is nylon, polyethylene, polypropylene, polystyrene, acrylonitrile butadiene styrene resin, or polyvinyl chloride.

3. The method as defined in claim 2, which is **characterized in that** said nylon is nylon 6, nylon 11, nylon 12, or nylon 66.

4. The method as defined in claim 1, which is **characterized in that** the preformed external tube (20') in the step (a) is internally pressurized by a gas having a pressure higher than one atmospheric pressure.

5. The method as defined in claim 1, which is **characterized in that** the thermosetting resin is epoxy resin, acrylic resin, phenolic resin, or polyurethane.

6. The method as defined in claim 1, which is **characterized in that** the preformed internal tube (24') and the external tube (20) are bonded by an adhesive material in the step (b).

7. The method as defined in claim 1, which is **characterized in that** the preformed internal tube (24') in the step (c) is internally pressurized by a gas having a pressure higher than one atmospheric pressure.

8. A shock-absorbable bicycle frame (10) comprising a tubular member (28), which is **characterized in that** the tubular member (28) has an internal tube (24) and an external tube (20) sleeved onto at least one part of the internal tube (24), none of any gap being formed between the internal and external tubes (24, 20), the internal tube (24) being made of fiber reinforced thermosetting plastic, the external tube (20) being made of fiber reinforced thermoplastic plastic.

9. The shock-absorbable bicycle frame as defined in claim 8, which is **characterized in that** the fiber reinforced thermoplastic plastic comprises nylon, polyethylene, polypropylene, polystyrene, acrylonitrile butadiene styrene resin, or polyvinyl chloride.

10. The shock-absorbable bicycle frame as defined in claim 9, which is **characterized in that** said nylon is nylon 6, nylon 11, nylon 12, or nylon 66.

11. The shock-absorbable bicycle frame as defined in claim 8, which is **characterized in that** the fiber reinforced thermosetting plastic comprises epoxy resin, acrylic resin, phenolic resin, or polyurethane.

12. The shock-absorbable bicycle frame as defined in claim 8, which is **characterized in that** the external tube (20) comprises a gap (201) formed thereon to become an incomplete tube.
